# EUROPEAN PATENT APPLICATION

(11) **EP 2 312 186 A1**
(43) Date of publication of application: **20.04.2011**
(21) Application number: 09173248.7
(22) Date of filing: 16.10.2009
(51) Int. Cl.: F16J 15/02, F16J 15/06, F01D 11/00, F01D 25/16, F02C 7/28

(54) **Method of manufacturing a fairing with an integrated seal**

(71) Applicant: General Electric Company, Schenectady, NY 12345 (US)
(72) Inventor: Tudor, Courtney James, Cincinnati, OH 45243 (US); Garten, Scott Alan, Cincinnati, OH 45242 (US); Kalaani, Eli B., Hamilton, OH 45011 (US); Mehta, Samir Mahendra, Cincinnati, OH 45208 (US); Dinser, Steven Edward, Burlington, KY 41005 (US)
(74) Representative: Gray, Thomas

(57) **Abstract**

A method of manufacturing an integrated seal (50) on a component is disclosed, comprising the steps of supplying a component (71) having an edge portion (41), forming a profile (44) on the edge portion (41), supplying a seal (50), applying a bond preparation on a surface on the edge portion (41), applying a bonding material (48) on the seal (50), mounting the seal (50) to the edge portion (41), and curing the bond. A method of assembling a stator assembly (80) is disclosed comprising the steps of providing a vane (22), providing a first fairing (81) located near a first side (25) of the vane (22), the first fairing (81) having a first seal (61) coupled to a first edge portion (45) of the first fairing (81), providing a second fairing (82) located near a second side (26) of the vane (22), the second fairing (82) having a second seal (62) coupled to a second edge portion (46) of the second fairing (82) and engaging a portion of the first seal (61) with a portion of the second seal (62).

## Description

### BACKGROUND OF THE INVENTION

This invention relates generally to seals for reducing leakage of a fluid, and more specifically to integrated seals in fairings used in gas turbine engines and methods of manufacturing fairings having integrated seals.

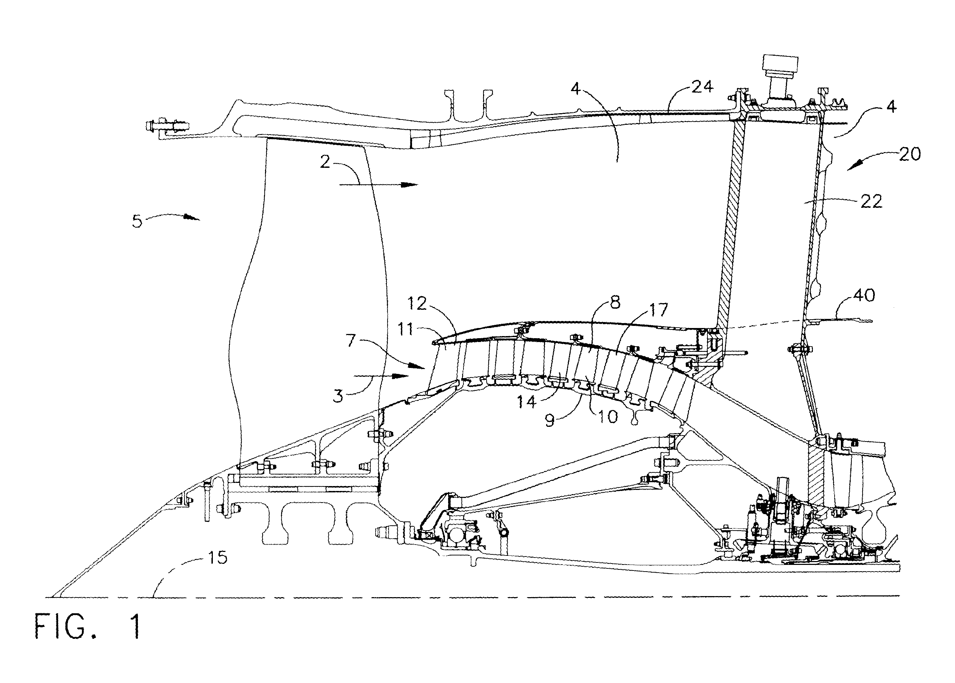

In a gas turbine engine, air is pressurized in fan and compressor modules during operation. The air is channeled through separate flow paths in the fan module and the compressor module. FIG. 1 illustrates, for example, a bypass airflow 2 in a fan module and a core airflow 3 in a low pressure compressor (booster) module. Compressed air is mixed with fuel in a combustor and ignited, generating hot combustion gases which flow through turbine stages that extract energy therefrom for powering the fan and compressor rotors and generate engine thrust to propel an aircraft in flight. Engine frames are used to support and carry the bearings which, in turn, rotatably support the rotors. Conventional turbofan engines have a fan frame, a mid-frame, and an aft turbine frame. Such frames may have an external casing and an internal hub which are attached to each other through a plurality of multiple radially extending struts that extend through the flowpath.

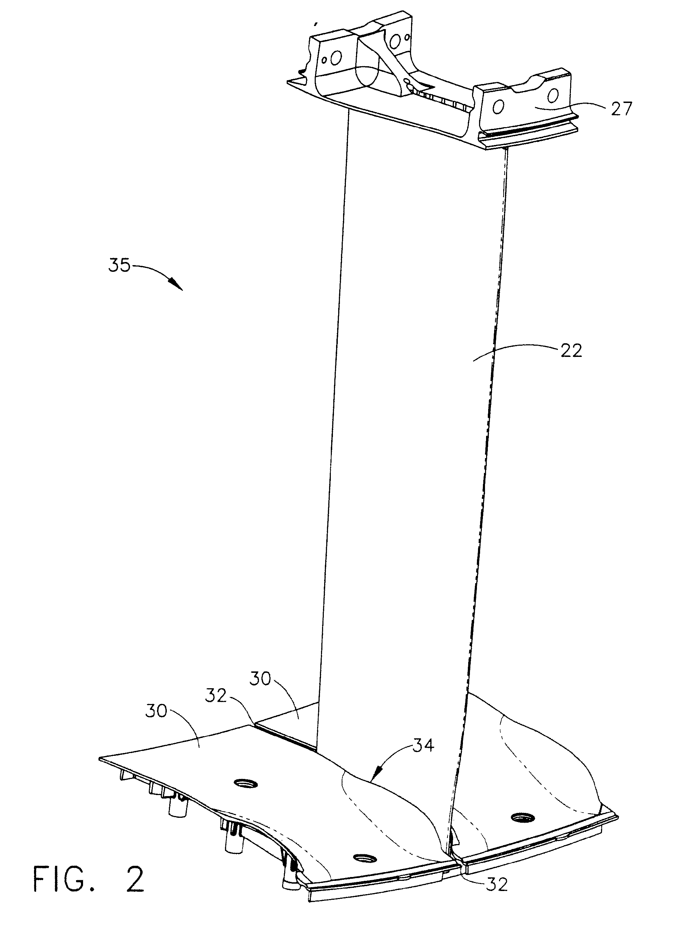

Flowpath liner and fairing assemblies provide a flowpath that guides and directs the gases flowing through the frame. In some gas turbine engines, the stator assemblies have segmented fairings that are arranged circumferentially wherein vanes or struts extend between circumferentially adjacent fairing segments. A strut or a vane that extends radially through a flowpath is referred to herein as outlet guide vane ("OGV"). The OGVs may, in some applications, reorient the flow in the flowpath to a more axial direction. FIG. 2 shows a conventional assembly of two conventional fairings 30 adjacent to an OGV 22 that extends radially between them. The OGV is attached at its radially outer end using conventional attachment means, such as, for example, an attachment flange 27. The conventional fairings 30 are arranged circumferentially to form an annular flow path such as, for example, the bypass flowpath that flows bypass airflow 2 shown in FIG. 1.

FIG. 2 illustrates some of the problems that may exist in using conventional stator assemblies 35 having the conventional fairings 30. The conventional stator assembly 35 has an axial gap 32 located at the interface between two adjacent conventional fairings 30. An axial gap 34 also exists at the interface between the OGV 22 and the two adjacent conventional fairings 30. These axial gaps 32, 34 cause leakage of a portion of the fluid flowing over the conventional fairings 30, such as the leakage of bypass airflow 2 from the flowpath, leading to a performance loss in the engine. The performance loss is further aggravated by the fact that, in some designs, the OGVs may have different geometries at different circumferential locations and result in conventional fairings 30 having axial gaps 34 that vary at these different circumferential locations. In conventional methods of assembling the conventional stator assembly 35, the gaps 32, 34 are sometimes closed during assembly using known methods, such as caulking using commercially available materials. Because of the additional assembly and coupling or sealing processes and hardware associated with these multi-piece conventional fairings 30 and OGV's, and because of the tolerances that may be necessary to meet structural requirements, manufacturing and assembly costs of such conventional assembly and sealing methods using conventional fairings 30 are high and time-consuming. Durability of the conventional sealing of the conventional fairings 30 described above may also be a problem in certain applications.

Accordingly, it would be desirable to have a fairing having a seal that is capable of interfacing with an adjacent component, such as, for example, another fairing or an OGV, to facilitate reducing leakage of a fluid. It would be desirable to have a stator assembly that has fairings adjacent to a vane wherein the fairings have seals that engage with adjacent components to facilitate reducing leakage of a fluid in the stator assembly. It would be desirable to have a method of manufacturing an integrated seal on a component, such as for example, a fairing. It would be desirable to have a method of assembling a stator having fairings that have integrated seals.

### BRIEF DESCRIPTION OF THE INVENTION

The above-mentioned need or needs may be met by exemplary embodiments which provide a method of manufacturing an integrated seal on a component, comprising the steps of supplying a component having an edge portion, forming a profile on the edge portion, supplying a seal, applying a bond preparation on a surface on the edge portion, applying a bonding material on the seal, mounting the seal to the edge portion, and curing the bond.

In another aspect of the present invention, a method of assembling a stator assembly comprises the steps of providing a vane, providing a first fairing located near a first side of the vane, the first fairing having a first seal coupled to a first edge portion of the first fairing, providing a second fairing located near a second side of the vane, the second fairing having a second seal coupled to a second edge portion of the second fairing and engaging a portion of the first seal with a portion of the second seal.

### BRIEF DESCRIPTION OF THE DRAWINGS

There follows a detailed description of embodiments of the invention by way of example only with reference to the accompanying drawings, in which:
FIG. 1 is an axial sectional view through a portion of a gas turbine engine having an exemplary embodiment of the present invention;
FIG. 2 is an isometric view of a conventional stator assembly using conventional fairings;
FIG. 3 is a plan view of a stator assembly according to an exemplary embodiment of the present invention;
FIG. 4 is an isometric view of a fairing according to an exemplary embodiment of the present invention;
FIG. 5 is a frontal view of a portion of the fairing shown in FIG. 4;
FIG. 6 is a schematic cross-sectional view of two adjacent fairings according to an exemplary embodiment of the present invention;
FIG. 7 is a schematic cross-sectional view of two adjacent fairings according to an alternative embodiment of the present invention;
FIG. 8 is a schematic cross-sectional view of two adjacent fairings according to another alternative embodiment of the present invention;
FIG. 9 is a schematic cross-sectional view of two adjacent fairings according to another alternative embodiment of the present invention;
FIG. 10 is a schematic cross-sectional view of two adjacent fairings according to another alternative embodiment of the present invention; and.
FIG. 11 is a flow chart showing an exemplary embodiment of a method for manufacturing an integrated seal.

### DETAILED DESCRIPTION OF THE INVENTION

Referring to the drawings wherein identical reference numerals denote the same elements throughout the various views, FIG. 1 shows a portion of a gas turbine engine, having a fan 5 and a booster (low pressure compressor) 7 configured for channeling and pressurizing a bypass airflow 2 and a core airflow 3 respectively. The booster 7, which pressurizes the air flowing through the core, is axisymmetrical about a longitudinal centerline axis 15, and includes an inlet guide vane (IGV) stage 11 having a plurality of inlet guide vanes 12 spaced in a circumferential direction around the longitudinal centerline axis 15 and a plurality of stator vane stages 17. The booster 7 further includes multiple rotor stages 18 which have corresponding rotor blades 50 extending radially outwardly from a rotor hub 19 or corresponding rotors in the form of separate disks, or integral blisks, or annular drums in any conventional manner. Cooperating with each rotor stage, such as for example, the rotor stage 18, is a corresponding stator stage 17. Each stator stage 17 in the booster 7 comprises a plurality of circumferentially spaced apart stator vanes 40.

The fan rotor 5 pressurizes the air coming into the engine inlet and comprises a plurality of fan blades 6 arranged circumferentially around the longitudinal centerline axis 15. The bypass air flow 2 passes through an annular bypass duct 4 and the fan frame struts or OGVs 22. The OGVs, in some applications, reorient the flow in the flowpath to a more axial direction. The OGVs may also carry structural loads in some applications, whereas in other applications, the structural loads are carried by the frame struts and the OGVs are used for re-orienting flows.

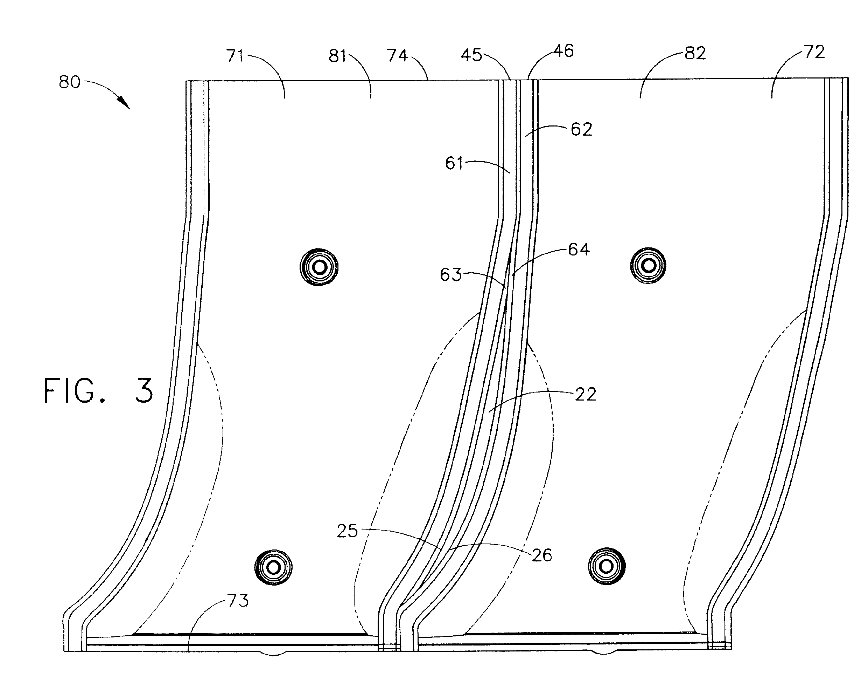

FIG. 3 shows a stator assembly 80 according to an exemplary embodiment of the present invention. The stator assembly 80 comprises a stator vane 22, a first fairing 81 having a first seal 61 located circumferentially adjacent to a first side 25 of the vane 22. A second fairing 82 having a second seal 62 is located circumferentially adjacent to a second side 26 side of the vane 22 as shown in FIG. 3. The first seal 61 may be integrally coupled to a first edge portion 45 of the first fairing 81 and the second seal 62 may be integrally coupled to a second edge portion 46 of the second fairing 82. The first fairing 81 is located circumferentially very close to the vane 22 such that the first seal 61 reduces the axial gap between the first seal 61 and the first side of vane 22. The first seal 61 may be brought into contact with the first side 25 of the vane 22 such that the axial gap between the first seal 61 and the first side of vane 22 may be eliminated at those locations where such contact is established. Similarly, the second fairing 82 is located circumferentially very close to the vane 22 such that the second seal 62 reduces the axial gap between the second seal 62 and the second side of vane 22. The second seal 62 may be brought into contact with the second side 26 of the vane 22 such that the axial gap between the second seal 62 and the second side of vane 22 may be eliminated at those locations where such contact is established. By reducing, or even eliminating, the axial gaps between the vane 22 and the adjacent seals 61, 62, leakage of the air flowing in the stator assembly 80 through such axial gaps is reduced.

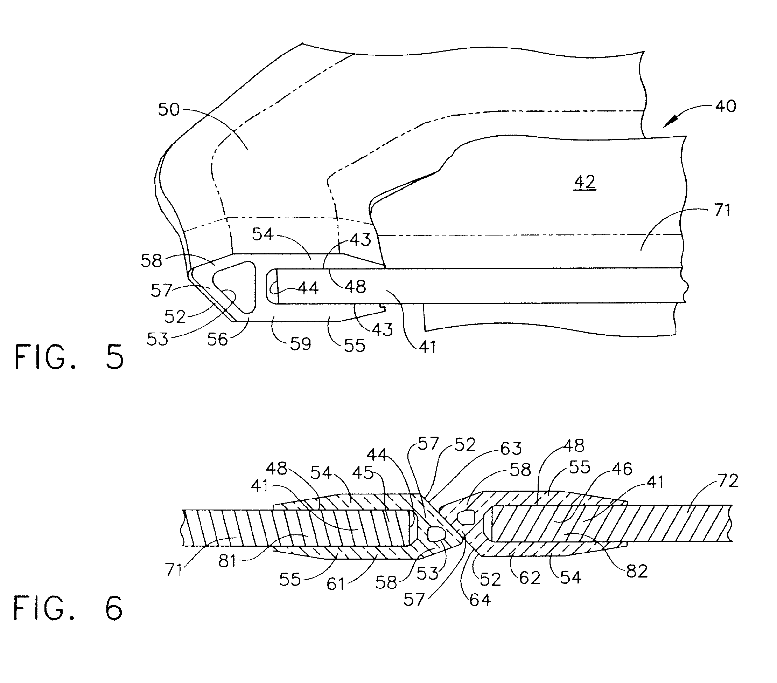

As shown in FIG. 3, the first fairing 81 and second fairing 82 are assembled such that the first seal 61 and the second seal 62 also interface with each other at axial locations away from the vane 22. The first fairing 81 and second fairing 82 are assembled such that at locations axially forward and axially aft from the vane 22, the first seal 61 is circumferentially very close to the second seal 62 and reduce the axial gap between them. The axial gap may be eliminated at some axial locations wherein the first seal 61 overlaps with the second seal 62, such as, for example, shown in FIG. 6 and explained subsequently herein. By reducing, or even eliminating, the axial gaps between the adjacent seals 61, 62, leakage of the air flowing in the stator assembly 80 through such axial gaps is reduced.

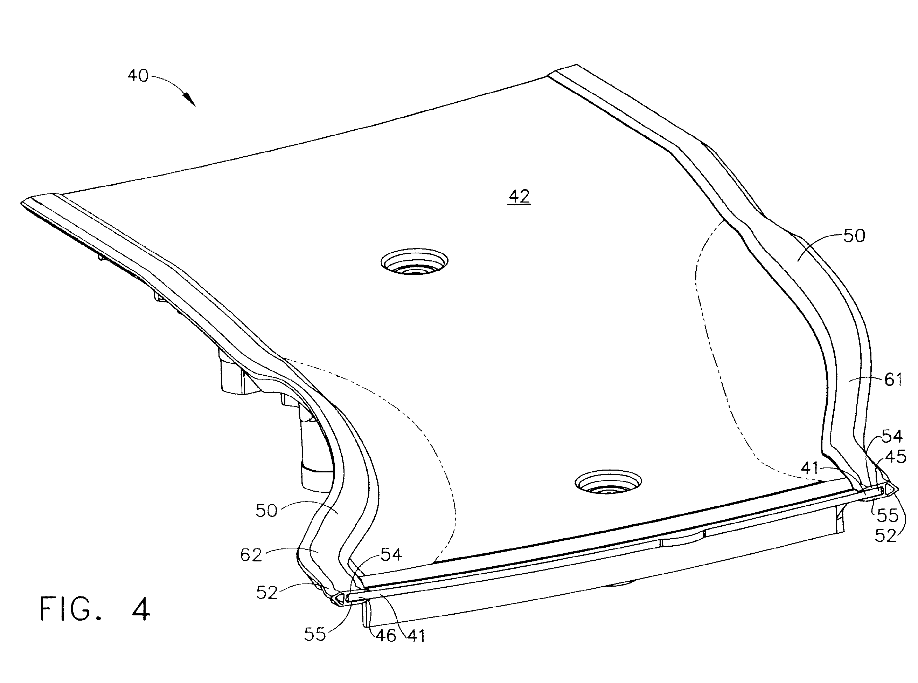

FIG. 4 shows a fairing 40 according to an exemplary embodiment of the present invention. Fairing 40 may be used, preferably, as the first fairing 81 and/or the second fairing 82 in the stator assembly 80 described previously herein in detail. Fairing 40 comprises a surface 42 which may serve to contain a fluid or as a bounding surface for a fluid that flows over the surface 42. For example, fairing 40 may be used as one of the components that form a portion of conduit walls of the annular flowpath shown in FIG. 1 or a stator assembly 80. Surface 42 of the fairing 40 defines a portion of the flowpath 4 boundaries that bound an airflow, such as the bypass airflow 2 shown in FIG. 1 and the airflow through the stator assembly 80 having OGVs.

Fairing 40 comprises an edge portion 41 that has a geometry adapted to receive a seal, such as seal 50 shown in FIG. 4. Two edge portions 41 that are located circumferentially apart from each other, and having seals 50 coupled to each edge portion 41, are illustrated in FIG. 4. A first seal 61 is located at the first edge portion 45, and a second seal 62 is located at a second edge portion 46 of the fairing 40. The edge portions of the fairing 40 have a geometric contour in the axial direction that generally corresponds with the geometry of the interface with vane 22. For example, as shown in FIG. 4, the first edge portion 45 has a generally convex geometry in the axial direction corresponding generally with a concave portion of the vane 22, and the second edge portion 46 has a generally concave geometry corresponding generally with a convex portion of the vane 22. Fairing 40 is made known from materials, such as nylon having about 20% carbon, using known processes, such as injection molding. Seals are preferably made from a Silicone material, such as Room Temperature Vulcanized ("RTV") Silicone, that is commercially available. Other suitable materials, such as Silicone, Rubber, Neoprene, Polysulfide, and Polyurethane, or any combinations thereof, may also be used to make the seals.

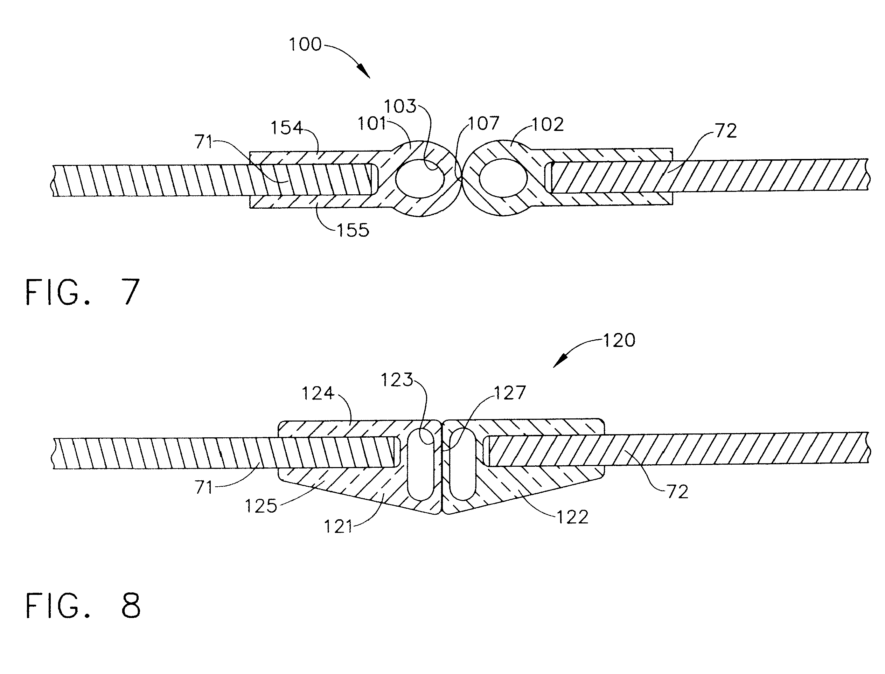

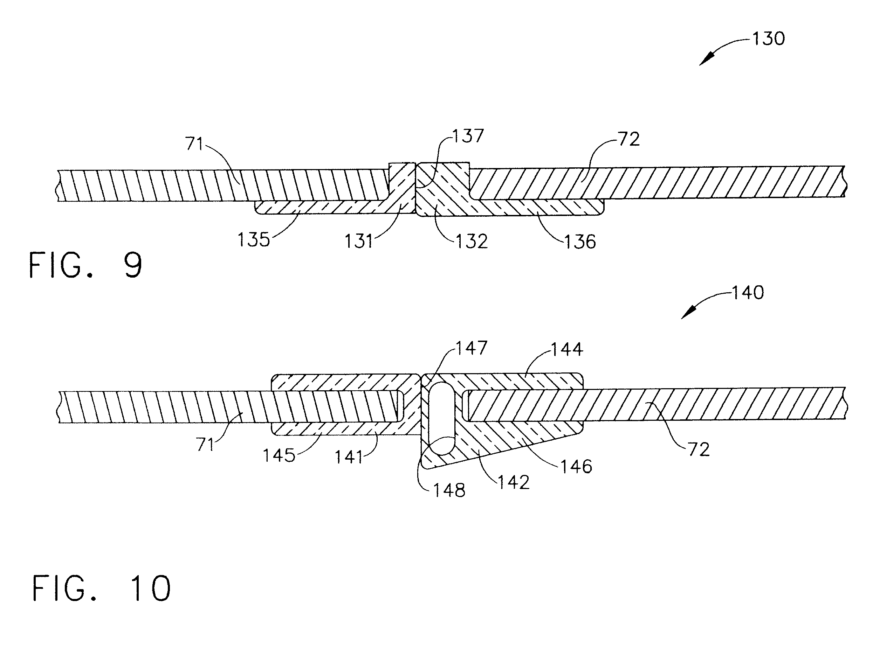

An enlarged view of an edge portion 41 of the fairing 40 having a seal 50 coupled to it is shown in FIG. 5. The edge portion 41 has an edge 44 that has a suitable contour in the axial direction, as explained previously. The edge portion 41 has suitable bonding surfaces 43 that are used for bonding with the seal, as explained subsequently herein. The seal 50 has a cross-sectional shape as shown, for example, in FIG. 5 and FIG. 6. The seal 50 comprises a support portion 59 and a head portion 56, see FIG. 5. The support portion 59 comprises a support flange 54 that supports the seal 50 on the edge portion 41 of the fairing 40. The support flange 54 may be bonded to a bonding surface 43 on the fairing 40, using bonding material 48 at the interface between the fairing 40 and the seal support flange 54, as explained subsequently herein. In the exemplary embodiment shown in FIG. 4 and 5 the seal 50 has two support flanges 54, 55 that are used to mount the seal 50 to the edge portion 41 of the fairing 40. The head portion 56 of the seal 50 comprises a sealing wall 57 and a support wall 58. The sealing wall 57 has a contact face 52 that, when assembled in a sealing arrangement (see FIG. 3, for example), may contact with an adjacent component such as a vane 22 or an adjacent seal 50, to provide sealing and reduce leakage of a fluid. In the exemplary embodiment shown in FIGS. 5 and 6, that contact face 52 is substantially flat. The support wall 58 supports at least a portion of the sealing wall 57 and transfers a portion of the contact loads from the sealing wall 57 to the support portion 59 of the seal 50, which in turn transfers it to the fairing 40. As shown in FIG. 5, the sealing wall 57, the support wall 58 and the support portion 56 may form a cavity profile 53 having sufficient flexibility and strength to provide effective sealing. In the exemplary embodiments shown in FIG. 4 and 5, the cavity profile 53 has a generally triangular shape. Other suitable profiles, such as, for example, shown as items 103 in FIG. 7, item 123 in FIG. 8 and item 148 in FIG. 10, may be used alternatively.

FIG. 6 shows a schematic cross-sectional view of two adjacent components 71, 72 sealingly engaged with each other, according to an exemplary embodiment of the present invention. The two adjacent components 71, 72 may be, in one example, the first fairing 81 having a first seal 61 and the second fairing 82 having a second seal 62, shown in FIG. 3. FIG. 6 shows a cross-section of the interface between two fairings 81, 82, having the two adjacent seals 61, 62 after assembly, such as in a stator assembly 80. In FIG. 6, the contact faces 52 of the two seals 61, 62 are engaged such that there is no gap between the seals, providing full sealing. It is possible that, in some limited cases due to manufacturing tolerances at some locations, or due to certain operating conditions in the engine, there may be a small clearance between the two seals that are not significant compared to conventional assemblies. Methods of mounting and bonding a seal to a fairing as described herein can be used to couple each seal with the corresponding component.

FIG. 7 shows a schematic cross-sectional view of an alternative exemplary embodiment 100 of the present invention, showing two adjacent components 71, 72 having seals 101, 102. The seals 101, 102 have a cavity profile 103 that is generally circular in shape. Other suitable cavity profile shapes may also be used. A notable feature of the seals 101, 102 shown in FIG. 7 is that the contact face that provides sealing is non-planar. A non-planar contact face, such as shown for example in FIG. 7, provides advantages in some applications, such as, for example, in cases involving significant movements between the two adjacent components 71, 72. The seal 101 has support flanges 154, 155 that are used for mounting the seal 101 to the first component 71. Methods of mounting and bonding a seal to a fairing as described herein can be used to couple each seal 101, 102 with the corresponding component 71, 72.

FIG. 8 shows a schematic cross-sectional view of another alternative exemplary embodiment 120 of the present invention, showing two adjacent components 71, 72 having seals 121, 122. The seals 121, 122 have a cavity profile 123 that is a composite of rectangular and circular shapes. Other suitable cavity profile shapes may also be used. The contact face 127 is planar. The seal 121 has support flanges 124, 125 that are used for mounting the seal 121 to the first component 71. The support flange 125 has a different geometry from the support flange 124. Methods of mounting and bonding a seal to a fairing as described herein can be used to couple each seal 121, 122 with the corresponding component 71, 72.

FIG. 9 shows a schematic cross-sectional view of another alternative exemplary embodiment 130 of the present invention, showing two adjacent components 71, 72 having seals 131, 132. Unlike the other embodiments shown in FIGS. 6-8, the seals 131, 132 do not have a cavity inside. The first seal 131 has a single support flange 135. The second seal 132 has a different geometry from the first seal 131, and has a single support flange 136. The contact face 137 is planar. Methods of mounting and bonding a seal to a fairing as described herein can be used to couple each seal 131, 132 with the corresponding component 71, 72.

FIG. 10 shows a schematic cross-sectional view of another alternative exemplary embodiment 140 of the present invention, showing two adjacent components 71, 72 having seals 141, 142. The seal 142 has a cavity profile 148 that is a composite of rectangular and circular shapes. Other suitable cavity profile shapes may also be used. The seal 141 does not have a cavity inside. The contact face 147 is planar. The seal 141 has support flanges 145, and the seal 142 has support flanges 144, 146 that are used for mounting the seals to the corresponding components 71, 72. The support flange 144 has a different geometry from the support flange 146. Methods of mounting and bonding a seal to a fairing as described herein can be used to couple each seal 141, 142 with the corresponding component 71, 72.

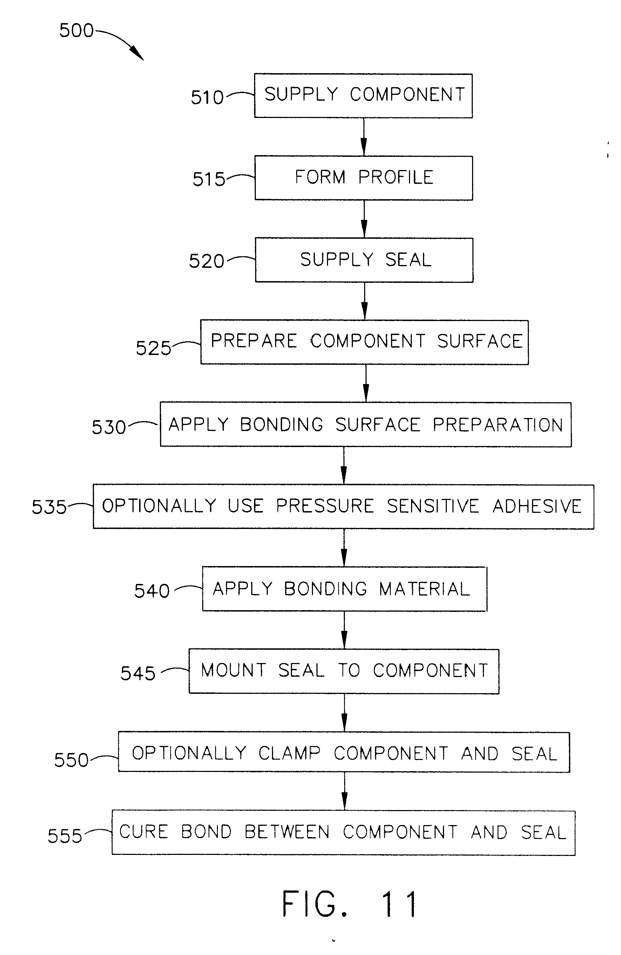

FIG. 11 shows a flow chart schematically showing an exemplary embodiment of a method 500 for manufacturing an integrated seal 50 on a component such as a fairing 40. The method 500 comprises the step 510 of supplying a component, such as for example, a fairing 40. The fairing 40 may be made from a known material, such as, for example, nylon, and made by a known process, such as for example, injection molding. The fairing may have has an edge portion 41 having axial edges (see FIG. 5 for example). The method 500 further comprises the step 515 of forming a profile 44 on the edge portion 41. For example, the axial edges are preferably machined to have a suitable contour corresponding to the contours of an adjacent component during assembly, such as for example, a vane 22 in a stator assembly 80. The method 500 further comprises the step 520 of supplying a seal 50, such as, for example shown in FIGS. 5-10 and described previously herein.

The method 500 further comprises the step 525 of preparing the component surface 43 (see FIG. 5). The surface 43 may be cleaned with an alcohol wipe to remove dirt. The surface 43 may also be sanded using known methods. The method 500 further comprises the step 530 of applying a bond preparation on a surface 43 on the edge portion 41. This can be done, for example, by applying a primer to the surface 43 of the component. A primer having isopropyl alcohol, acetone and xylene works well for this application. A commercially available primer, such as Silicone Bonding Primer supplied by GE Silicone or its commercial replacement, can be used. Parts are allowed to dry after the application of primer. In some applications, the step 530 of applying a bond preparation may also include applying a plasma treatment to the surface 43 on the edge portion 41.

Optionally, the method 500 comprises a step 535 of applying a pressure sensitive adhesive (PSA) tape to the component surface 43 or the seal 50. A double sided PSA tape may be used to hold the seal 50 in place during mounting. The PSA is preferably used on the side of the fairing that is opposite to the flow path side.

The method 500 further comprises the step 540 of applying a bonding material 48 on the seal 50. The bonding material is applied to the bonding surfaces 43 and interior portions of the support flanges 54, 55. The bonding material is preferably Silicone RTV for a stator assembly 80 application in a gas turbine engine. Other suitable bonding materials may be used as appropriate for specific applications.

The method 500 further comprises the step 545 of mounting the seal 50 to the component 40. The flanges 54, 55 of the seal 50 are mounted on the edge portion 41 of the component, such as the fairing 40. In an optional step 550, the seal 50 and the fairing 40 may be optionally clamped together using a suitable clamping fixture in order to provide intimate contact during bonding between the seal 50 and the fairing 40. In step 555, the bond material 48 between the seal 50 and the edge portion 41 is cured. When Silicone RTV is used for bonding, curing may be completed in about 7 days. The bonds cure sufficiently for handling in about 24 hours. Other known methods may also be used for curing.

As used herein, an element or step recited in the singular and proceeded with the word "a" or "an" should be understood as not excluding plural said elements or steps, unless such exclusion is explicitly recited. When introducing elements/components/steps etc. of components or assemblies described and/or illustrated herein, the articles "a", "an", "the" and "said" are intended to mean that there are one or more of the element(s)/component(s)/etc. The terms "comprising", "including" and "having" are intended to be inclusive and mean that there may be additional element(s)/component(s)/etc. other than the listed element(s)/component(s)/etc. Furthermore, references to "one embodiment" of the present invention are not intended to be interpreted as excluding the existence of additional embodiments that also incorporate the recited features.

This written description uses examples to disclose the invention, including the best mode, and also to enable any person skilled in the art to make and use the invention. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

For completeness, various aspects of the invention are now set out in the following numbered clauses:
1. A method of manufacturing an integrated seal comprising the steps of:
   supplying a component having an edge portion;
   forming a profile on the edge portion;
   supplying a seal;
   applying a bond preparation on a surface on the edge portion;
   applying a bonding material on the seal;
   mounting the seal to the edge portion; and
   curing the bond between the seal and the component.
2. A method according to clause 1, wherein the step of supplying a seal comprises supplying a seal having a support flange and a sealing wall.
3. A method according to clause 1, wherein the step of supplying a seal comprises supplying a seal having a sealing contact face that is substantially flat.
4. A method according to clause 1, wherein the step of supplying a seal comprises supplying a seal having a sealing contact face that is non-planar.
5. A method according to clause 1, wherein the step of supplying a seal comprises supplying a seal made from a material selected from a group consisting of Silicone, Rubber, RTV Silicone, Neoprene, Polysulfide, and Polyurethane, or any combinations thereof.
6. A method according to clause 1, wherein the step of applying a bond preparation comprises a surface cleaning operation.
7. A method according to clause 1, wherein the step of applying a bond preparation comprises a surface roughening operation.
8. A method according to clause 1, wherein the step of applying a bond preparation comprises applying a plasma treatment.
9. A method according to clause 1, wherein the step of applying a bonding material on the seal comprises the step of applying a pressure sensitive adhesive on the seal.
10. A method according to clause 1, wherein the step of applying a bonding material on the seal comprises the step of applying a silicone material on the seal.
11. A method according to clause 1, wherein the step of mounting the seal to the edge portion comprises the step of inserting a portion of the seal on the edge portion.
12. A method according to clause 1, wherein the step of curing the bond between the seal and the component is performed at room temperature.
13. A method according to clause 1, wherein the step of curing the bond between the seal and the component is performed at a temperature higher than room temperature.
14. A method according to clause 1, further comprising the step of clamping the seal to the component during curing.
15. A method according to clause 1, wherein the component is a fairing.
16. A method of assembling a stator assembly comprising the steps of:
   providing a vane;
   providing a first fairing located near a first side of the vane, the first fairing having a first seal coupled to a first edge portion of the first fairing;
   providing a second fairing located near a second side of the vane, the second fairing having a second seal coupled to a second edge portion of the second fairing; and
   engaging a portion of the first seal with a portion of the second seal to form a contact between the portions thus engaged.
17. A method of assembling a stator assembly according to clause 16, further comprising the step of engaging a portion of the first seal with a portion of the vane such that a clearance between the portions thus engaged is substantially reduced.
18. A method of assembling a stator assembly according to clause 17, further comprising the step of engaging a portion of the second seal with a portion of the vane such that a clearance between the portions thus engaged is substantially reduced.
19. A method of assembling a stator assembly according to clause 16, wherein the first seal is bonded to the first fairing and the second seal is bonded to the second fairing.
20. A method of assembling a stator assembly according to clause 16, wherein the first seal is made from a material selected from a group consisting of Silicone, Rubber, RTV Silicone, Neoprene, Polysulfide, and Polyurethane, or any combinations thereof.

## Claims

1. A method of manufacturing an integrated seal (50) comprising the steps of:
supplying a component (71) having an edge portion (41);
forming a profile (44) on the edge portion (41);
supplying a seal (50) having a support flange (54) and a sealing wall (57);
applying a bond preparation on a surface on the edge portion (41);
applying a bonding material (48) on the seal (50);
mounting the seal (50) to the edge portion (41); and
curing the bond between the seal (50) and the component (71).

2. A method according to claim 1, wherein the step of supplying a seal comprises supplying a seal having a support flange and a sealing wall.

3. A method according to claim 1, wherein the step of supplying a seal comprises supplying a seal having a sealing contact face that is substantially flat.

4. A method according to claim 1, wherein the step of supplying a seal comprises supplying a seal having a sealing contact face that is non-planar.

5. A method according to any of the preceding claims, wherein the step of supplying a seal (50) comprises supplying a seal (50) made from a material selected from a group consisting of Silicone, Rubber, RTV Silicone, Neoprene, Polysulfide, and Polyurethane, or any combinations thereof.

6. A method according to any of the preceding claims, wherein the step of applying a bond preparation comprises a surface cleaning operation.

7. A method according to any of the preceding claims, wherein the step of applying a bond preparation comprises a surface roughening operation.

8. A method according to any of the preceding claims, wherein the step of applying a bond preparation comprises applying a plasma treatment.

9. A method according to any of the preceding claims, wherein the step of applying a bonding material (48) on the seal (50) comprises the step of applying a pressure sensitive adhesive on the seal (50).

10. A method according to any of the preceding claims, wherein the step of applying a bonding material (48) on the seal (50) comprises the step of applying a silicone material on the seal (50).

11. A method according to any of the preceding claims, wherein the step of curing the bond between the seal (50) and the component is performed at room temperature.

12. A method of assembling a stator assembly (80) comprising the steps of:
providing a vane (22);
providing a first fairing (81) located near a first side (25) of the vane (22), the first fairing (81) having a first seal (61) coupled to a first edge portion (45) of the first fairing (81);
providing a second fairing (82) located near a second side (26) of the vane (22), the second fairing (82) having a second seal (62) coupled to a second edge portion 46 of the second fairing (82); and
engaging a portion of the first seal (61) with a portion of the second seal (62) to form a contact between the portions thus engaged.

13. A method of assembling a stator assembly (80) according to claim 12, further comprising the step of engaging a portion of the first seal (61) with a portion of the vane (22) such that a clearance between the portions thus engaged is substantially reduced.

14. A method of assembling a stator assembly according to claim 12 or 13, wherein the first seal (61) is bonded to the first fairing (81) and the second seal (62) is bonded to the second fairing (82).

15. A method of assembling a stator assembly according to any of claims 12 to 14, wherein the first seal (61) is made from a material selected from a group consisting of Silicone, Rubber, RTV Silicone, Neoprene, Polysulfide, and Polyurethane, or any combinations thereof.
